## Europäisches Patentamt
## European Patent Office
## Office européen des brevets

(19)

(11) Veröffentlichungsnummer: **0 120 194**
**B1**

(12) **EUROPÄISCHE PATENTSCHRIFT**

(45) Veröffentlichungstag der Patentschrift:
01.06.88

(51) Int. Cl.⁴: **G 06 F 9/38**

(21) Anmeldenummer: **84100397.3**

(22) Anmeldetag: **16.01.84**

(54) Speicherprogrammierbare Steuerung mit Wort- und Bitprozessor.

(30) Priorität: **28.01.83 DE 3302940**

(43) Veröffentlichungstag der Anmeldung:
**03.10.84 Patentblatt 84/40**

(45) Bekanntmachung des Hinweises auf die Patenterteilung:
**01.06.88 Patentblatt 88/22**

(84) Benannte Vertragsstaaten:
**AT BE CH DE FR GB IT LI SE**

(56) Entgegenhaltungen:
**EP - A - 0 012 242
DE - A - 2 817 536
DE - A - 3 101 270**

**PATENTS ABSTRACTS OF JAPAN, Band 6, Nr. 62
(P-111)(940), 21. April 1982**

(73) Patentinhaber: **Siemens Aktiengesellschaft Berlin und München, Wittelsbacherplatz 2, D-8000 München 2 (DE)**

(72) Erfinder: **Ninnemann, Peter, Dipl.-Ing., Klebheimer Strasse 6, D-8551 Röttenbach (DE)**
Erfinder: **Wollscheid, Dieter, Dipl.-Ing., Oppelner Strasse 21, D-8520 Erlangen (DE)**

**Beschreibung**

Die Erfindung bezieht sich auf eine speicherprogrammierbare Steuerung mit zyklisch durchlaufenem Anwenderprogramm, bestehend zumindest aus:

a) einem Wortprozessor zur Bearbeitung von Betriebssystem- und Wortbefehlen,

b) einem Bitprozessor zur Bearbeitung binärer Verknüpfungsbefehle und

c) Anwenderprogrammspeicher, Betriebssystemspeicher und Datenspeicher mit binärem Prozessabbild.

Speicherprogrammierbare Steuerungen sind beispielsweise in der Siemens-Zeitschrift «Energietechnik» 1979, Heft 2, Seiten 43 bis 47 oder in Heft 4, Seiten 136 bis 139 oder in der europäischen Patentschrift 10 170 und den US-Patentschriften 3 921 146 oder 3 942 158 näher beschrieben.

Derzeit gängige Mikroprozessoren, im folgenden als Wortprozessoren bezeichnet, sind in ihrem Befehlssatz in der Regel für einen breiten Anwenderkreis, d.h. universell, ausgelegt. Im Zuge der Entwicklung nimmt dieser Befehlssatz an Umfang und Leistungsfähigkeit ständig zu. Kennzeichnend bei dieser Entwicklung ist auch, dass immer mehr Informationsträger (Bits) zusammengefasst und parallel bearbeitet werden.

Es gibt jedoch auch spezielle Anwendungsfälle, bei denen weitgehend bitbreite Informationen bearbeitet werden müssen. Hierbei trägt z.B. ein Bit unabhängig von anderen die Information über periphere Zustände, wie z.B. Schalter «Ein», Schalter «Aus», Eingangsbedingung erfüllt oder nicht erfüllt.

Eine komfortable, speicherprogrammierbare Steuerung der eingangs genannten Art soll sowohl logische Verknüpfung von bitbreiten Daten durchführen als auch komplexe Funktionen mit wortbreiten Daten, wie z.B. Arithmetikfunktion, Datentransfer, Zeitenbildung usw. ausführen können.

Es ist daher vorteilhaft, im Rahmen einer speicherprogrammierbaren Steuerung ein Mehrprozessorsystem zu verwenden, bei dem die Ausführung der Binärbefehle einem gesonderten schnellen Bitprozessor übertragen wird, wogegen ein relativ langsamer Wortprozessor die komplexen Funktionen ausführen kann (vgl. z.B. Siemens-Zeitschrift Energietechnik 1980, Heft 9, Seiten 361).

Da die wortbreite und bitbreite Verarbeitung der Daten gemischt und zum Teil abhängig voneinander stattfindet, ist ein spezielles Verfahren zur Kopplung und Synchronisation der Prozessoren erforderlich. Berücksichtigt werden muss dabei ausserdem, dass vom Wortprozessor, sowohl in bestimmten Abständen als auch völlig asynchrom zum eigentlichen Programmablauf (Wort- und Bitoperationen), zusätzlich spezielle Routinen abgearbeitet werden müssen. Der eigentliche Programmablauf mit bit- und wortweiser Datenbearbeitung soll durch diese Routinen möglichst wenig belastet werden, jedoch niedrigste Priorität haben, d.h. sobald die Bearbeitung einer dieser speziellen Routinen anfällt, muss diese sofort und unbedingt vorgenommen werden.

Die Aufgabe der vorliegenden Erfindung besteht darin, eine einfache Kopplung und Synchronisation der beiden Prozessoren anzugeben, bei der man von der Art des Wortprozessors weitgehend unabhängig ist.

Diese Aufgabe wird erfindungsgemäss durch die kennzeichnenden Merkmale des Hauptanspruches gelöst; eine besonders vorteilhafte Ausführung ergibt sich mit folgenden Merkmalen:

a) dem Bitprozessor ist ein Mapping-Speicher mit Befehlsadressen zugeordnet, unter denen Programmroutinen des Wortprozessors beginnen,

b) der Bitprozessor steuert beim Lesen und Abarbeiten eines binären Verknüpfungsbefehls des Anwenderprogrammspeichers eine Adresse des Mapping-Speichers an, unter der die Anfangsadresse einer Programmroutine des Wortprozessors zur fortlaufenden Abfrage des Mapping-Speichers steht (Poll-Schleife),

c) der Bitprozessor steuert beim Lesen eines Wortbefehls im Anwenderprogrammspeicher diejenige Adresse im Mapping-Speicher an, unter der die Anfangsadresse der diesem Wortbefehl entsprechenden Programmroutine für den Wortprozessor gespeichert ist und geht bis zum Abarbeiten der Programmroutine in den Haltzustand, und der Wortprozessor springt nach der Abfrage der Anfangsadresse zu dieser Anfangsadresse.

Ebenso steuert der Bitprozessor beim Erreichen eines Haltepunktes diejenige Adresse im Mapping-Speicher an, worin die Anfangsadresse steht, unter der eine Routine zur Bearbeitung des Haltepunktes im Betriebssystem des Wortprozessors beginnt.

Auf die vorgenannte Weise wird erreicht, dass bei festem Befehlscode der Wortoperation im Anwenderprogrammspeicher die Einsprungadressen der zugeordneten Programmteile variabel gehalten werden können.

Anhand einer Zeichnung sei die Erfindung näher erläutert; es zeigen:

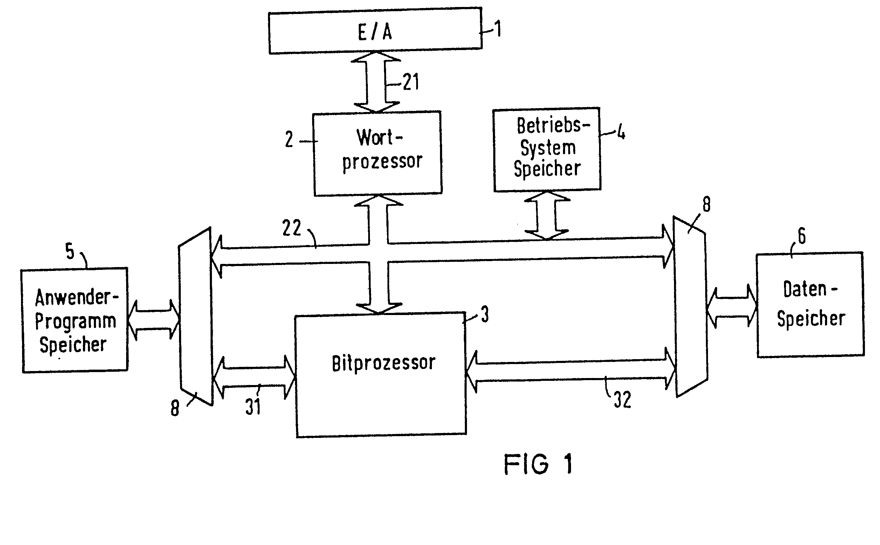

Fig. 1 die Struktur der speicherprogrammierbaren Steuerung,

Fig. 2 die Struktur der Kopplung zwischen Wortprozessor und Bitprozessor,

Fig. 3 den Befehlsablauf im Wortprozessor und

Fig. 4 den Befehlsablauf im Bitprozessor.

Bei dem vorliegenden Mehrprozessorsystem wird die Ausführung der Binärbefehle einem gesonderten schnellen Bitprozessor 3 übertragen, wogegen ein relativ langsamer Wortprozessor 2 die komplexen Funktionen ausführt. Der Wortprozessor 2 verfügt über einen Peripheriebus, an den die Ein- und Ausgabebaugruppen 1 von und zum Prozess angeschlossen sind, ferner noch einen internen Systembus 22, an den Betriebssystemspeicher 4 und über Datenweichen 8 Anwenderprogrammspeicher 5 und Datenspeicher 6 mit Prozessabbild anschliessbar sind. An den gleichen Bus 22 ist auch der Bitprozessor 3 angeschlossen, der über eigene Busse 31 und 32 und über die Datenweichen 8 ausschliesslich Zugriff auf Anwenderprogrammspeicher 5 und Datenspeicher 6 mit Prozessabbild hat. Der Verkehr mit der Peripherie läuft immer über den Wortprozessor 2, der an den Zyklusgrenzen immer den Zustand aller Eingangsinformationen vom Prozess her in den internen Datenspeicher 6 ablegt und die sich aus den Verknüpfungen ergebenden Ausgangssignale im Datenspeicher 6 am Zyklusende an die Prozessperipherie überträgt. Während des Ablaufs des Programms wird also nicht direkt mit den eigentlichen Signalen der Prozessperipherie, sondern mit dem internen Prozessabbild im Datenspeicher 6 gearbeitet (vgl. z.B. europäische Patentschrift 10170).

Die Instruktionen über Bit- oder Wortoperationen sind in einer speziellen Programmiersprache verschlüsselt und im Anwenderprogrammspeicher 5 niedergelegt. Diese Instruktionen werden vom Bitprozessor 3 direkt und vom Wortprozessor 2 in bestimmten Programmteilen abgearbeitet. Diese Programmteile sowie die eingangs genannte Routine sind im Betriebssystemspeicher 4 des Wortprozessors 2 in der Sprache des verwendeten Mikroprozessors fest niedergelegt.

Im folgenden wird ein Kopplungsverfahren beschrieben, das den eingangs genannten Forderungen gerecht wird (d.h. die gemeinsame Abarbeitung einer speziellen Programmiersprache durch Wort- und Bitprozessor möglich macht) und ein universelles Design des Bitprozessors 3, d.h. unabhängig vom Typ des angekoppelten Wortprozessors 2, zulässt.

Kennzeichnend für das Gesamtsystem ist, dass grundsätzlich der Wortprozessor 2 als Standardmikroprozessor, und der Bitprozessor 3 jeweils eigene Programmzähler besitzen und zunächst völlig unabhängig und asynchron zueinander arbeiten können.

Der Bitprozessor 3 selbst verhält sich für den Wortprozessor 2 wie eine Speicherschnittstelle bzw. ein intelligenter Peripheriebaustein. Er besitzt interne Register, aus denen der Wortprozessor 2 jederzeit den momentanen Status, wie z.B. «RUN» oder «HALT» entnehmen kann. Durch Schreibzugriff auf eines dieser Register kann ausserdem der Bitprozessor 3 jederzeit vom Wortprozessor 2 gestartet oder gestoppt werden.

Der Programmzähler für den eigentlichen Programmablauf liegt im Bitprozessor 3. Dieser holt sich, nachdem er gestartet wurde, Instruktionen D aus dem Programmspeicher 5 und unterscheidet diese nach Wort- und Bitoperationen. Nach Erkennen einer Bitoperation führt er diese sofort selbst aus, wird eine Wortoperation erkannt, übergibt er diese dem Wortprozessor 2 und geht automatisch in den Status «HALT».

Der Bitprozessor 3 selbst hat keine Zugriffs- oder Steuermöglichkeit zum Wortprozessor 2. Er stellt lediglich in seinen internen Registern Informationen für den Wortprozessor 2 bereit. Die Steuerung des Gesamtsystems muss daher vom Wortprozessor 2 ausgehen. Durch dieses Prinzip wird erreicht, dass der Bitprozessor nicht auf einen speziellen Wortprozessortyp zugeschnitten werden muss, sondern in seiner Schnittstelle allgemein gehalten und von einem beliebigen Standardmikroprozessor wie ein Speicher oder ein intelligenter Peripheriebaustein gehandhabt werden kann.

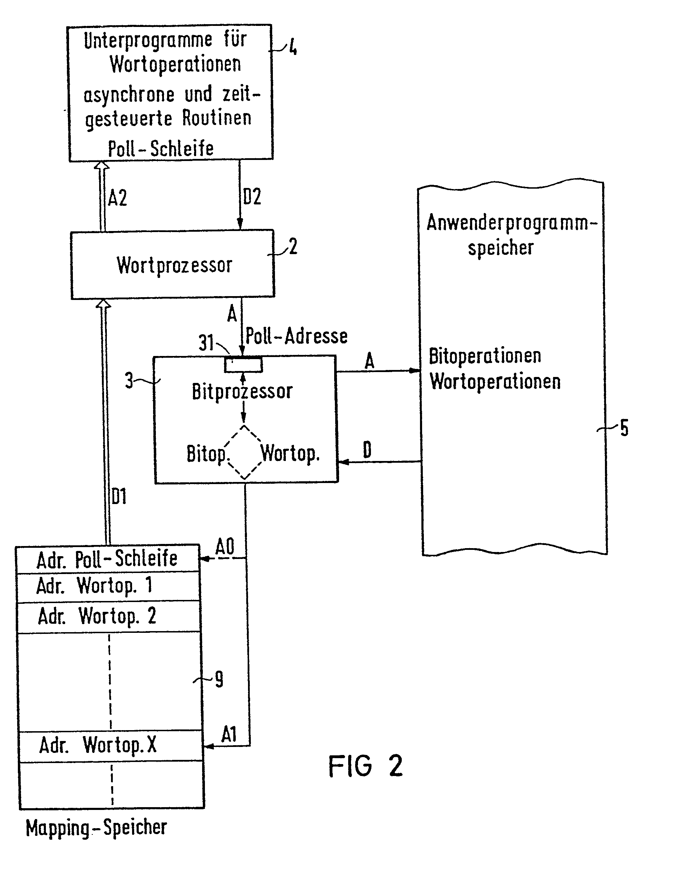

Wie aus Figur 2 ersichtlich, bestehen somit die Aufgaben des Bitprozessors 3 aus Befehl D im Anwenderprogrammspeicher 5 unter der Adresse A seines Programmzählers zu holen, die Befehlsart zu erkennen (Wort- oder Bitoperation) und dann entsprechend zu reagieren. Dies bedeutet, dass bei Bitoperationen diese vom Bitprozessor abgearbeitet werden, während beim Erkennen einer Wortoperation diese an den Wortprozessor 2 übergeben wird, worauf anschliessend der Bitprozessor stoppt und auf erneuten Start durch den Wortprozessor wartet. Die Aufgaben des Wortprozessors 2 bestehen aus Abarbeiten bestimmter, sowohl asynchron als auch zeitgesteuerter anfallender Routinen und zusätzlich noch in der Steuerung des Bitprozessors 3 mit Abarbeitung von durch den Bitprozessor erkannten Wortoperationen in speziellen Programmteilen.

Jede Wortoperation wird durch ein spezielles Programmteil vom Wortprozessor 2 interpretiert. Die Einsprungadresse in den einer bestimmten Operation zugeordneten Programmteil erhält der Wortprozessor 2 nicht direkt über den Code der Wortoperation im Anwenderprogrammspeicher 5, sondern über einen zwischengeschalteten Mapping-Speicher 9. Der Code der Wortoperation bildet die Adresse A1 für eine bestimmte Speicherzelle des Speichers 9, unter welcher als Datum D1 die Einsprungsadresse in den entsprechenden Programmteil verzeichnet ist. Bei der Bearbeitung dieses Programmteiles kann der Wortprozessor dann auch auf weitere Daten im Anwenderprogrammspeicher zugreifen. Auf diese Weise wird erreicht, dass bei festem Befehlscode der Wortoperation die Einsprungadressen der zugeordneten Programmteile variabel gehalten werden können.

Wie angegeben, wird die Synchronisierung zwischen Wort- und Bitprozessor durch die Steuerung HALT/Start des Bitprozessors seitens des Wortprozessors 2 vorgenommen. Der Programmzähler des Bitprozessors 3 kann vom Wortprozessor 2 gelesen und geschrieben werden. Ist der Programmzähler durch den Wortprozessor mit einem definierten Wert vorbesetzt worden, wird der Bitprozessor 3 gestartet. Der Bitprozessor 3 läuft frei an und übernimmt die vorgenannten Aufgaben. Währenddessen bearbeitet der Wortprozessor 2 entweder parallel zum Bitprozessor 3 anfallende Routinen oder befindet sich in einer Untätigkeitsschleife (Poll-Schleife), in der er lediglich zwei aufeinanderfolgende 8-Bit-Register 31 des Bitprozessors 3 adressiert, worauf diese Register 31 des Bitprozessors 3 den Mapping-Speicher 9 so ansteuern, d.h. adressieren, dass dieser der Art der Wortoperation entsprechende Daten D1 auf den Datenbus legt. Diese Daten werden als 16-bit-Adresse A2 interpretiert, zu der der Wortprozessor 3 nun verzweigt. Diese Adresse A2 ist entweder die Einsprungadresse für eines der Programmteile für Wortoperationen oder der Anfang dieser Untätigkeitsschleife selbst.

Solange vom Bitprozessor 3 keine Wortoperation erkannt wird, liefern diese Register 31 beim Adressieren die Grundadresse A0 des Mapping-Speichers 9, d.h. die Einsprung- oder Anfangsadresse der Pollschleife. Erkennt der Bitprozessor 3 eine Wortoperation im Anwenderprogrammspeicher 5, so schaltet er über die entsprechend veränderten Register 31 dem Mapping-Speicher 9 den Code der Wortoperation als Adresse A1 auf, und der Wortprozessor liest in seiner Schleife unter der Adresse der obengenannten Register das Datum D1 der durch den Bitprozessor 3 adressierten Speicherzelle des Mapping-Speichers 9, also die Einsprungadresse A2 in den Programmteil D2 für diese Wortoperation im Speicher 4. Der Wortprozessor 2 verzweigt also immer dort hin, wohin die Adresse im Bitprozessor in den obengenannten Registern 31 zeigt, also zum Anfang der Schleife oder in eines der Programmteile.

Nach Erkennen einer Wortoperation bleibt der Bitprozessor 3 stehen und muss am Ende des entsprechenden Programmteils des Wortprozessors für die Wortoperation vom Wortprozessor 2 wieder gestartet werden. Da der Programmzähler im Bitprozessor nach jedem kompletten Holen einer Instruktion inkrementiert wird, erhält er bereits die richtige Fortsetzungsadresse für das Weiterlesen im Anwenderprogrammspeicher 5. War die Wortoperation ein Sprungbefehl, so muss der Wortprozessor vor dem erneuten Starten des Bitprozessors 3 dessen Programmzähler auf das Sprungziel umladen.

Die Poll-Schleife des Wortprozessors 2 besteht bei gängigen Mikroprozessoren aus ca. 2 bis 4 Befehlen – Register des Bitprozessors adressieren und zur aus dem Speicher 9 gelesenen Adresse springen. Dadurch wird eine extrem kurze Reaktionszeit auch beim Erkennen von Wortoperationen erreicht.

Zusätzlich wird durch den Mapping-Speicher 9 ein softwaremässiges Verzweigen über eine Liste überflüssig und wiederum dadurch Zeit gespart.

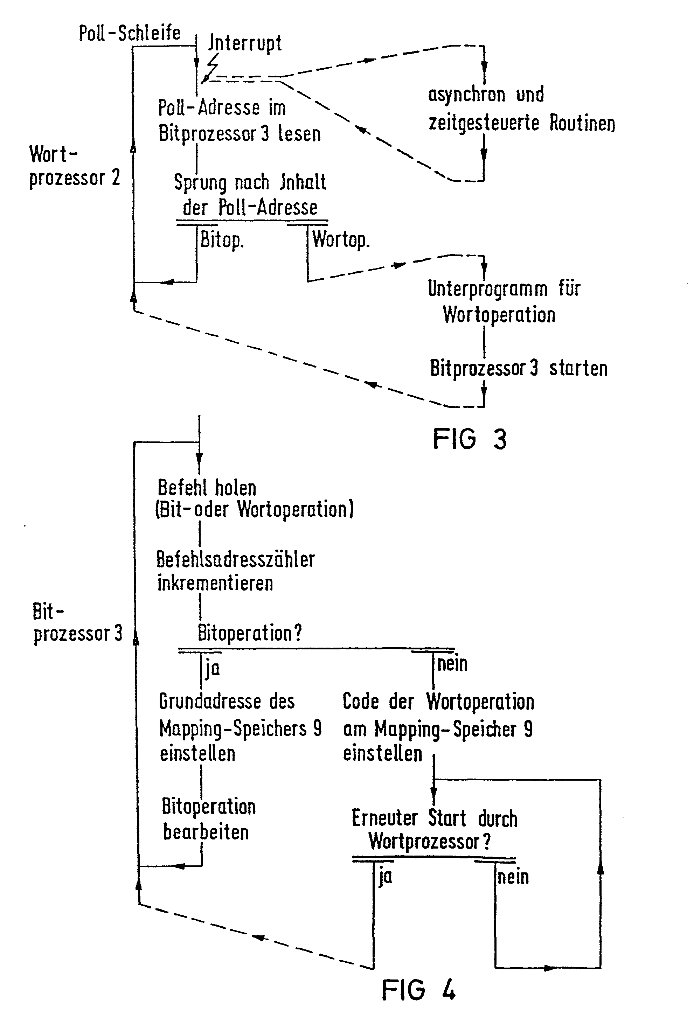

Während der Bearbeitung von Bitoperationen kann der Wortprozessor 2 über «Interrupts» aus seiner Poll-Schleife in die eingangs genannten asynchron- oder zeitgesteuerten Routinen springen und diese parallel zur Arbeit des Bitprozessors arbeiten, wie dies auch aus Figur 3 ersichtlich ist. Erkennt der Bitprozessor 3 dann eine Wortoperation, so bleibt der eigentliche Programmablauf nur so lange bestehen, bis der Wortprozessor 2 in seine Poll-Schleife zurückgekehrt ist und die Wortoperation bearbeiten kann.

Neben den schnellen Reaktionszeiten liegen die Hauptvorteile dieser Kopplung in der einfachen Synchronisierungsmöglichkeit zwischen Wort- und Bitprozessor, in der möglichen Parallelarbeit beider Prozessoren und in der Unabhängigkeit der Auslegung des Bitprozessors von der Art des Wortprozessors. Die Schnittstelle zum Bitprozessor ist als Speicherschnittstelle realisiert und frei von jeglichen zusätzlichen Steuerleitungen. Es ist aber auch eine weniger aufwendige und dafür etwas weniger leistungsfähige Lösung möglich. Der Speicher 9 wird weggelassen. Der Speicherinhalt, welcher die Nummer, die die Art des Wortbefehls spezifiziert, auf die Einsprungadresse in den Programmteil des Wortbefehls transformiert, befindet sich dann innerhalb des Speichers 4 in einem Konstantdatenfeld. Der Wortprozessor 2 liest im Bitprozessor lediglich die Information, die anzeigt, ob ein Wortbefehl aufgetreten ist, welcher Wortbefehl anliegt und ob ein Haltepunkt erreicht wurde. Die erforderliche Einsprungadresse wird nun per Programm durch Zugriff auf die Tabelle, d.h. das Datenfeld, ermittelt.

Es ist auch möglich, dass auf ein Umcodieren der Information durch Speicher verzichtet wird und der Wortprozessor 2 die Information aus dem Bitprozessor 3 direkt als Einsprungadresse benutzt oder hieraus diese Adresse mit logischen oder arithmetischen Operationen (Maskieren, Schieben, Addieren) bildet.

## Patentansprüche

1. Speicherprogrammierbare Steuerung mit zyklisch durchlaufenem Anwenderprogramm, bestehend zumindest aus:
a) einem Wortprozessor zur Bearbeitung von Betriebssystem- und Wortbefehlen,
b) einem Bitprozessor zur Bearbeitung binärer Verknüpfungsbefehle und
c) Anwenderprogrammspeicher,
Betriebssystemspeicher und Datenspeicher mit binärem Prozessabbild, gekennzeichnet durch folgende Merkmale:
d) der den Anwenderprogrammspeicher (5) sequentiell lesende Bitprozessor (3) hält beim Erkennen eines Wortbefehls an, bis er durch den Wortprozessor (2) wieder gestartet wird und stellt eine den Wortbefehl kennzeichnende Information zur Verfügung,
e) der Wortprozessor (2) erhält eine aus dieser Information abgeleitete Einsprungadresse für eine dem Wortbefehl entsprechende Programmroutine und springt zu der ermittelten Einsprungadresse, wenn er keine Betriebssystem-Programmroutinen auszuführen hat.

2. Speicherprogrammierbare Steuerung nach Anspruch 1, gekennzeichnet durch folgende Merkmale:
a) dem Bitprozessor (3) ist ein Mapping-Speicher (9) mit Befehlsadressen zugeordnet, unter denen Programmroutinen des Wortprozessors (2) beginnen,
b) der Bitprozessor (3) steuert beim Lesen und Abarbeiten eines binären Verknüpfungsbefehls des Anwenderprogrammspeichers (5) eine Adresse des Mapping-Speichers (9) an, unter der die Anfangsadresse einer Programmroutine des Wortprozessors zur fortlaufenden Abfrage des Mapping-Speichers (9) steht (Poll-Schleife),
c) der Bitprozessor (3) steuert beim Lesen eines Wortbefehls im Anwenderprogrammspeicher (5) diejenige Adresse im Mapping-Speicher (9) an, unter der die Anfangsadresse der diesem Wortbefehl entsprechenden Programmroutine für den Wortprozessor (2) gespeichert ist und geht bis zum Abarbeiten der Programmroutine in den Haltzustand und der Wortprozessor springt nach der Abfrage der Anfangsadresse zu dieser Anfangsadresse.

3. Speicherprogrammierbare Steuerung nach Anspruch 2, dadurch gekennzeichnet, dass der Bitprozessor (3) beim Erreichen eines Haltepunktes diejenige Adresse im Mapping-Speicher (9) ansteuert, worin die Anfangsadresse steht, unter der eine Routine zur Bearbeitung des Haltepunkts im Betriebssystem des Wortprozessors (2) beginnt und dass der Wortprozessor (2) anschliessend zu dieser Anfangsadresse springt.

4. Speicherprogrammierbare Steuerung nach Anspruch 1, gekennzeichnet durch folgende Merkmale:
a) der Wortprozessor (2) erkennt bei einem lesenden Zugriff auf vom Bitprozessor angesteuerte Register, ob der Bitprozessor (3) einen Binärbefehl ausführt, ob und welcher Wortbefehl einen Halt des Bitprozessors (3) hervorgerufen hat und/oder ob ein Haltepunkt erreicht ist,
b) der Wortprozessor (2) ermittelt aus dieser Information durch Auslesen eines Datenbereiches im Betriebssystemspeicher (4) eine Adresse, zu der er im Anschluss springt.

5. Speicherprogrammierbare Steuerung nach Anspruch 1, dadurch gekennzeichnet, dass der Wortprozessor (2) die vom Bitprozessor (3) übergebene Information direkt als Sprungadresse interpretiert oder mittels arithmetischer oder logischer Operationen die Sprungadresse ermittelt.

**Claims**

1. A stored-programme control with a cyclically run user programme, comprising at least:
a) a word processor for processing operating system- and word commands,
b) a bit processor for processing binary logic-linking commands and
c) user programme store, operating system store and process bit map data store, characterised by the following features:
d) on the recognition of a word command, the bit processor (3), which sequentially reads the user programme store (5), stops until it is re-started by the word processor (2), and makes available an item of information identifying the word command,
e) the word processor (2) acquires an entry address, derived from this information, for a programme routine corresponding to the word command and jumps to the determined entry address when it has no operating system programme routines to execute.

2. A stored-programme control as claimed in claim 1, characterised by the following features:
a) the bit processor (3) is assigned a mapping store (9) with command addresses under which programme routines of the word processor (2) commence,
b) in the read-out and processing of a binary logic-linking command of the user programme store (5), the bit processor (3) actuates an address of the mapping store (9) under which is stored the start address of a programme routine of the word processor for the continuous interrogation of the mapping store (9) (poll loop),
c) in the read-out of a word command in the user programme store the bit processor (3) actuates that address in the mapping store (9) under which is stored the start address of the programme routine for the word processor (2) which corresponds to this word command and assumes the halt state until the programme routine has been processed, and following the interrogation of the start address the word processor jumps to this start address.

3. A stored-programme control as claimed in claim 2, characterised in that when a fault is reached the bit processor (3) actuates that address in the mapping store (9) at which the start address is located under which commences a routine for processing the halt point in the operating system of the word processor (2), and that the word processor (2) then jumps to this start address.

4. A stored-programme control as claimed in claim 1, characterised by the following features:
a) during a read access to registers driven by the bit processor, the word processor (2) recognises whether the bit processor (3) is executing a binary command, whether a word command – and which command – has led to the stopping of the bit processor (3) and/or whether a halt point is reached,
b) by reading a data section in the operating system store (4), from this information the word processor (2) determines an address to which it then jumps.

5. A stored-programmed control as claimed in claim 1, characterised in that the word processor (2) directly interprets the information transferred from the bit processor (3) as a jump address or determines the jump address by means of arithmetic or logic operations.

**Revendications**

1. Commande à programme enregistré, comportant un programme utilisateur passé cycliquement, commande qui comprend au moins:
a) un processeur de mots pour le traitement d'instructions du système d'exploitation et d'instructions de mots,
b) un processeur de bits pour le traitement d'instructions binaires de chaînage et
c) une mémoire de programme utilisateur, une mémoire de système d'exploitation et une mémoire de données avec représentation binaire du processus, caractérisée en ce que:

d) le processeur de bits (3), qui lit de façon séquentielle la mémoire de programme utilisateur (5), s'arrête à la détection d'une instruction de mot, jusqu'à ce qu'il soit redémarré par le processeur de mots (2), et met à la disposition une information qui caractérise l'instruction de mot,

e) le processeur de mots (2) reçoit une adresse de reprise, laquelle est dérivée de cette information, pour un sous-programme correspondant à l'instruction de mot et saute à l'adresse de reprise déterminée, lorsqu'il n'a pas à exécuter des sous-programmes de système d'exploitation.

2. Commande selon la revendication 1, caractérisée en ce que:

a) au processeur de bits (3) est coordonnée une mémoire de correspondance d'informations (9) avec des adresses d'instructions sous lesquelles commencent des sous-programmes du processeur de mots (2),

b) lors de la lecture et du traitement d'une instruction de chaînage binaire de la mémoire de programme utilisateur (5), le processeur de bits (3) sélectionne une adresse de la mémoire de correspondance (9) sous laquelle se trouve l'adresse du début d'un sous-programme du processeur de mots pour l'interrogation continue de la mémoire de correspondance (9) (boucle d'appel),

c) lors de la lecture d'une instruction de mot dans la mémoire de programme utilisateur (5), le processeur de bits (3) sélectionne, dans la mémoire de correspondance (9), l'adresse sous laquelle est mémorisée l'adresse du début du sous-programme correspondant à cette instruction de mot pour le processeur de mots (2) et passe à l'état d'arrêt jusqu'à la fin de l'exécution du sous-programme, et le processeur de mots saute à cette adresse du début après interrogation de celle-ci.

3. Commande selon la revendication 2, caractérisée en ce que le processeur de bits (3), en atteignant un point d'arrêt, sélectionne, dans la mémoire de correspondance (9), l'adresse où se trouve l'adresse de début, sous laquelle commence un sous-programme pour le traitement du point d'arrêt dans le système d'exploitation du processeur de mots (2), et que le processeur de mots (2) saute ensuite à cette adresse de début.

4. Commande selon la revendication 1, caractérisée en ce que:

a) le processeur de mots (2) détecte, lors d'un accès de lecture à des registres attaqués par le processeur de bits, si le processeur de bits (3) exécute une instruction binaire, si une instruction de mot a provoqué un arrêt du processeur de bits (3) et, dans l'affirmative, quelle instruction de mot a provoqué cet arrêt et/ou si un point d'arrêt a été atteint,

b) le processeur de mots (2) détermine, à partir de cette information, par lecture d'une zone de données dans la mémoire de système d'exploitation (4), une adresse, à laquelle il saute ensuite.

5. Commande selon la revendication 1, caractérisée en ce que le processeur de mots (2) interprète l'information transmise par le processeur de bits (3) directement comme adresse de transfert ou détermine l'adresse de transfert à l'aide d'opérations arithmétiques ou logiques.

FIG 1

0 120 194

FIG 2

Poll-Schleife ‖ Jnterrupt

Wortprozessor 2

Poll-Adresse im
Bitprozessor 3 lesen

asynchron und
zeitgesteuerte Routinen

Sprung nach Jnhalt
der Poll-Adresse

Bitop. | Wortop.

Unterprogramm für
Wortoperation

Bitprozessor 3 starten

## FIG 3

Bitprozessor 3

Befehl holen
(Bit-oder Wortoperation)

Befehlsadresszähler
inkrementieren

Bitoperation?

ja | nein

Grundadresse des
Mapping-Speichers 9
einstellen

Code der Wortoperation
am Mapping-Speicher 9
einstellen

Bitoperation
bearbeiten

Erneuter Start durch
Wortprozessor?

ja | nein

## FIG 4